# EUROPÄISCHE PATENTSCHRIFT

(11) **EP 0 897 895 B1**
(45) Veröffentlichungstag und Bekanntmachung des Hinweises auf die Patenterteilung: **30.05.2001**
(21) Anmeldenummer: 97114219.5
(22) Anmeldetag: 18.08.1997
(51) Int. Cl.: C01G 25/02, H01M 8/12

(54) **Verfahren zum Herstellen eines keramischen Pulvers für einen Elektrolyten einer Hochtemperatur-Brennstoffzelle und Hochtemperatur-Brennstoffzelle**
Process for the preparation of a ceramic powder for an electrolyte of a high temperature fuel cell and high temperature fuel cell
Procédé pour la préparation d'une poudre céramique pour un électrolyte d'une pile à combustible fonctionnant à haute température et pile à combustible fonctionnant à haute température

(43) Veröffentlichungstag der Anmeldung: 24.02.1999
(73) Patentinhaber: SIEMENS AKTIENGESELLSCHAFT, 80333 München (DE)
(72) Erfinder: Schichl, Hermann, 91207 Lauf (DE); Schnöller, Manfred, 85778 Haimhausen (DE)

(56) Entgegenhaltungen:
- EP-A- 0 034 513
- EP-A- 0 199 930
- EP-A- 0 450 674
- WO-A-89/03365
- PATENT ABSTRACTS OF JAPAN vol. 097, no. 002, 28.Februar 1997 & JP 08 273683 A (RINNAI CORP), 18.Oktober 1996,
- CHEMICAL ABSTRACTS, vol. 121, no. 18, 31.Oktober 1994 Columbus, Ohio, US; abstract no. 211354, TOKYO GAS CO: XP002052869 & JP 06 199 569 A (TOKYO GAS CO)

## Beschreibung

Die Erfindung bezieht sich auf ein Verfahren zum Herstellen eines keramischen Pulvers für einen Elektrolyten einer Hochtemperatur-Brennstoffzelle.

Es ist bekannt, daß bei der Elektrolyse von Wasser die Wassermoleküle durch elektrischen Strom in Wasserstoff (H₂) und Sauerstoff (O₂) zerlegt werden. In einer Brennstoffzelle läuft dieser Vorgang in umgekehrter Richtung ab. Durch eine elektrochemische Verbindung von Wasserstoff (H₂) und Sauerstoff (O₂) zu Wasser entsteht elektrischer Strom mit hohem Wirkungsgrad und, wenn als Brenngas reiner Wasserstoff (H₂) eingesetzt wird, ohne Emission von Schadstoffen und Kohlendioxid (CO₂). Auch mit einem technischen Brenngas, beispielsweise Erdgas oder Kohlegas, und mit Luft (die zusätzlich mit Sauerstoff (O₂) angereichert sein kann) anstelle von reinem Sauerstoff (O₂) erzeugt eine Brennstoffzelle deutlich weniger Schadstoffe und weniger Kohlendioxid (CO₂) als andere Energieerzeuger, die mit fossilen Energieträgern arbeiten. Die technische Umsetzung des Prinzips der Brennstoffzelle hat zu unterschiedlichen Lösungen, und zwar mit verschiedenartigen Elektrolyten und mit Betriebstemperaturen zwischen 80 °C und 1000 °C, geführt.

In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen unterscheiden. Bei dem aus einer Vielzahl von Hochtemperatur-Brennstoffzellen sich zusammensetzenden Hochtemperatur-Brennstoffzellenstapel (in der Fachliteratur wird ein Brennstoffzellenstapel auch "Stack" genannt) liegen unter einer oberen Verbundleiterplatte, welche den Hochtemperatur-Brennstoffzellenstapel abdeckt, der Reihenfolge nach wenigstens eine Schutzschicht, eine Kontaktschicht, eine Elektrolyt-Elektroden-Einheit, eine weitere Kontaktschicht, eine weitere Verbundleiterplatte, usw.

Die Elektrolyt-Elektroden-Einheit umfaßt dabei zwei Elektroden und einen zwischen den beiden Elektroden angeordneten, als Membran ausgeführten Festelektrolyten. Dabei bildet jeweils eine zwischen benachbarten Verbundleiterplatten liegende Elektrolyt-Elektroden-Einheit mit den beidseitig an der Elektrolyt-Elektroden-Einheit unmittelbar anliegenden Kontaktschichten eine Hochtemperatur-Brennstoffzelle, zu der auch noch die an den Kontaktschichten anliegenden Seiten jeder der beiden Verbundleiterplatten gehören. Dieser Typ und weitere Brennstoffzellen-Typen sind beispielsweise aus dem "Fuel Cell Handbook" von A. J. Appleby und F. R. Foulkes, 1989, Seiten 440 bis 454, bekannt.

Zum Erreichen einer hohen elektrischen und ionischen Leitfähigkeit werden meist keramische Werkstoffe beim Herstellen der Komponenten der Hochtemperatur-Brennstoffzelle eingesetzt. Dabei werden die Komponenten entweder selbst aus einer Keramik hergestellt oder mit einer Schicht aus einer Keramik versehen. Beispielsweise werden die Elektroden und der Elektrolyt der Elektrolyt-Elektroden-Einheit der Hochtemperatur-Brennstoffzelle aus einer Keramik hergestellt, währenddessen die Verbundleiterplatten mit einer Keramik beschichtet werden. Zum Herstellen der Komponenten werden unter anderem Verfahren der Pulverbeschichtung angewendet. Unter der Pulverbeschichtung versteht man die Beschichtung oder Herstellung von Oberflächen, beispielsweise Metalloberflächen, durch Auftragen und Sintern von wärmehärtenden Pulvern. Diese können im Rotations- oder Flockverfahren, durch Pulverspritzverfahren wie Flammspritzen oder Metallspritzverfahren, aufgebracht werden. Als aufwendig erweist sich dabei die Herstellung des geeigneten Pulvers zum Pulverbeschichten, d.h. die Pulverisierung des keramischen Werkstoffes. Um eine hohe Haftfestigkeit zu erhalten, sollten die Pulverpartikel eine Korngröße im Bereich zwischen 0,1 und 500 um aufweisen.

Als Ausgangsstoff zum Herstellen der keramischen Pulver werden im wesentlichen Metallverbindungen verwendet. Bei dem aus dem Stand der Technik bekannten Verfahren werden die Oxide der Metalle, die bereits in pulverisierter Form vorliegen, miteinander vermischt. Dieses Gemisch wird einer Wärmebehandlung unterzogen. Dabei wird das Gemisch während mehrerer Zeitabschnitte unterschiedlichen Temperaturen ausgesetzt. Während dieser kommt es zu Reaktionen zwischen den Metalloxiden. Die einzelnen Verfahrensabschnitte sind dabei sehr aufwendig und die ablaufenden Reaktionen nur schwer zu kontrollieren. Außerdem wird das keramische Pulver zum Gewährleisten einer gleichmäßigen Förderbarkeit durch Beschichten mit einem Gleitmittel konditioniert. Das Verfahren erweist sich somit im Ganzen als sehr aufwendig.

Als nachteilig erweist sich dabei außerdem die schlechte Mischbarkeit des hergestellten keramischen Pulvers. Als Folge davon bilden sich Inhomogenitäten im Werkstoff. Der Werkstoff weist eine geringe Festigkeit und eine schlechte Ionenleitfähigkeit auf.

Der Erfindung liegt nun die Aufgabe zugrunde, ein Verfahren zum Herstellen eines keramischen Pulvers mit einer hohen ionischen Leitfähigkeit für einen ionenleitenden Elektrolyten einer Hochtemperatur-Brennstoffzelle anzugeben.

Erfindungsgemäß umfaßt ein Verfahren zum Herstellen eines keramischen Pulvers für die Herstellung eines ionenleitenden Elektrolyten, insbesondere eines sauerstoffionenleitenden Elektrolyten, einer Hochtemperatur-Brennstoffzelle folgende Schritte: In einem ersten Schritt (A) werden eine erste Lösung aus wenigstens einem Alkoholat wenigstens eines Metalles und eine zweite Lösung, die wenigstens ein Salz eines Metalles und ein Lösungsmittel enthält, miteinander vermischt und unter Zugabe von Wasser zu einem Gel umgesetzt. Anschließend wird in einem zweiten Schritt (B) das Gel bei erhöhter Temperatur zu einem Xerogel zersetzt. In einem dritten Schritt (C) wird dieses zum keramischen Pulver zerkleinert. Abschließend wird in einem vierten Schritt (D) das erhaltene keramische Pulver bei erhöhter Temperatur calciniert.

Der Begriff "Elektrolyt" ist eine Sammelbezeichnung für ionenleitende Medien (d.h. in diesem Fall für einen ionenleitenden Werkstoff). Bei der Hochtemperatur-Brennstoffzelle wird unter dem Elektrolyten aber auch ein Bauelement einer Elektrolyt-Elektroden-Einheit verstanden. Der Elektrolyt (als Bauelement) ist hier zwischen zwei Elektroden angeordnet und soll die Eigenschaft einer hohen Ionenleitfähigkeit (insbesondere für Sauerstoffionen) haben. Messungen der ionischen Leitfähigkeit haben gezeigt, daß ein Elektrolyt, der ein nach dem erfindungsgemäßen Verfahren hergestelltes keramisches Pulver enthält, eine wesentlich höhere ionische Leitfähigkeit als ein Elektrolyt besitzt, welcher nach dem aus dem Stand der Technik bekannten Verfahren hergestellt wird. Vorausgesetzt, daß es sich jeweils um den gleichen Werkstoff handelt, erhält man eine Steigerung der ionischen Leitfähigkeit um wenigstens 50 %. Außerdem zeigen die mit dem beanspruchten Verfahren hergestellten keramischen Pulver beim Einsatz als Elektrolyt keine Verschlechterung im Alterungsverhalten. Die ionische Leitfähigkeit hat sich beim Einsatz über einige 1000 Stunden nicht verschlechtert. Als Salze in der zweiten Lösung eignen sich besonders Scandiumoxid (Sc₂O₃), Yttriumoxid (Y₂O₃) und Ytterbiumoxid (YbO₃). Diese können in der zweiten Lösung sowohl einzeln oder auch als Gemisch enthalten sein.

Bei diesem Verfahren wird das Xerogel, insbesondere das durch Cracken (beispielsweise bei einer Temperatur zwischen 100 und 400 °C in Stickstoff) in einen mahlfähigen Zustand gebrachte Xerogel, im dritten Schritt (C) zum keramischen Pulver zerkleinert, insbesondere in einer Kugelmühle aus Polyacetal-Kunststoff, bevor es anschließend im vierten Schritt (D) bei erhöhter Temperatur calciniert wird. Bei den aus dem Stand der Technik bekannten Verfahren wird das Xerogel zuerst calciniert und anschließend zum keramischen Pulver aufbereitet. Nach dem erfindungsgemäßen Verfahren wird das Xerogel vor der Calcinierung (aber nachdem es in einen mahlfähigen Zustand gebracht wurde) zum keramischen Pulver zerkleinert, wodurch wesentlich bessere Ergebnisse in Bezug auf die Eigenschaften des keramischen Pulvers erzielt werden, wie beispielsweise für die Korngröße und die Morphologie des keramischen Pulvers.

Vorzugsweise enthält die erste Lösung etwa 20 Gew.-% Eisessig (CH₃COOH). Durch die Zugabe von Eisessig wird die Reaktionsfähigkeit der Lösungen vermindert, so daß die Lösungen anschließend zu einem klaren Gel umgesetzt werden, ohne daß es zu unerwünschten Ausflockungen kommt. Zum Durchführen des Verfahrens sind verschiedene Metallsalze (insbesondere Metallchloride) oder auch Mischungen von verschiedenen Metallsalzen geeignet.

In einer weiteren Ausgestaltung wird die thermische Zersetzung im zweiten Schritt (B) bei einer Temperatur T₁ von wenigsten 380°C, insbesondere in einer Stickstoffatmosphäre (N₂), für eine Zeitdauer t₁ zwischen 12 und 30 Stunden durchgeführt.

Insbesondere kann im vierten Schritt (D) die Calcinierung bei einer Temperatur T₂ zwischen 560 und 680°C für eine Zeitdauer t₂ von angenähert 5 Stunden durchgeführt werden. Diese Werte für die Temperaturen T₁ und T₂ sowie für die Zeitdauern t₁ und t₂ haben sich in der Praxis zum Erreichen der gewünschten Resultate bewährt. Weitere vorteilhafte Ausgestaltungen sind in den Unteransprüchen beschrieben.

Zum besseren Verständnis der Erfindung und ihrer Weiterbildungen werden zwei Ausführungsbeispiele anhand zweier Figuren erläutert. Es zeigen:
- FIG 1: die Abfolge eines Verfahrensbeispiels der Erfindung zum Herstellen eines keramischen Pulvers für einen Elektrolyten einer Hochtemperatur-Brennstoffzelle in schematischer Darstellung;
- FIG 2: einen Ausschnitt aus einer Hochtemperatur-Brennstoffzelle in schematischer Darstellung.

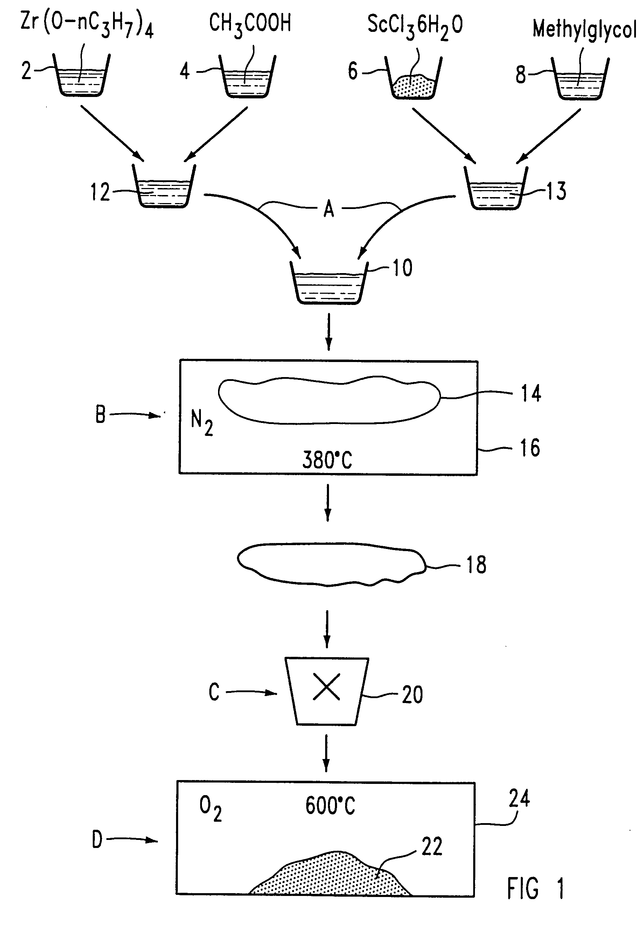

In FIG 1 erkennt man vier Vorratsbehälter 2 bis 8. Im Vorratsbehälter 2 befindet sich als Alkoholat Zirkonium-n-propoxid (Zr(OₙC₃H₇)₄) in n-Propanol (der Begriff "Alkoholat" ist eine Bezeichnung für basische Verbindungen aus einem Metall-Kation und einem Anion eines Alkohols; der Begriff "Propoxid" ist eine Gruppenbezeichnung für Alkoholate, die sich von 1- bzw. 2-Propanol ableiten). Im Vorratsbehälter 4 ist Eisessig(CH₃COOH) enthalten, im Vorratsbehälter 6 befindet sich Scandiumchlorid (ScCl₃6H₂O) als Metallsalz und im Vorratsbehälter 8 ist Methylglykol als Lösungsmittel enthalten. Die Inhalte der Vorratsbehälter 2 und 6 sind also ein Alkoholate bzw. ein Chlorid einer metallischen Ausgangssubstanz.

In einem ersten Schritt A werden eine erste Lösung 12, die etwa 62 Gew.-% Zirkonium-n-propoxid (Zr(OₙC₃H₇)₄) in n-Propanol und 14 Gew.-% Eisessig enthält (aus den Vorratsbehältern 2 und 4), und eine zweite Lösung 13, die etwa 10 Gew.-% Scandiumchlorid (ScCl₃6H₂O) und 14 Gew.-% Methylglykol enthält (aus den Vorratsbehältern 2 und 4), in einem Behälter 10 portionsweise vermischt und unter Zugabe von Wasser zu einem Gel 14 umgesetzt (beispielsweise beim Stehen an feuchter Luft). "Gele" sind eine allgemeine Bezeichnung für leicht deformierbare, an Flüssigkeiten und Gasen reiche disperse Systeme aus mindestens zwei Komponenten, die zumeist aus einem festen, kolloiden Stoff und einer Flüssigkeit (meist Wasser) als Dispersionsmittel bestehen.

In einem zweiten Schritt B wird das Gel 14 bei einer Temperatur von wenigstens 380°C in einem Trockenschrank 16 zu einem Xerogel 18 zersetzt. "Xerogele" sind Gele, die ihre Flüssigkeit auf irgendeine Weise (durch Verdampfen, Abpressen oder Absaugen) verloren haben, wobei sich auch die räumliche Anordnung des Netzes verändert, so daß die Abstände zwischen den Strukturelementen nur noch Dimensionen von Atomabständen besitzen. Zum Zersetzen ist eine Atmosphäre aus Stickstoff (N₂) besonders geeignet. Das Xerogel 18 ist in diesem Zustand besonders gut zum Zermahlen geeignet. Für den zweiten Schritt B ist eine Zeitdauer t₁ zwischen 12 und 30 Stunden vorgesehen.

In einem dritten Schritt C wird das Xerogel 18 in einer Kugelmühle 20 zu einem keramischen Pulver 22 zerkleinert. Die Korngröße des keramischen Pulvers 22 wird durch den Grad der Zerkleinerung im dritten Schritt C bestimmt.

Abschließend wird in einem vierten Schritt D das keramische Pulver 22 in einem Ofen 24 calciniert. Die Calcinierung erfolgt bei einer Temperatur T₂ zwischen 560 und 680°C, insbesondere bei 600°C. Die Calcinierung erfolgt in einer Zeitdauer t₂ von angenähert 5 Stunden. Für die Calcinierung ist eine Atmosphäre aus Sauerstoff O₂ oder Luft aus der Umgebung geeignet.

Das keramische Pulver 22 kann somit in eine förderbare Form für eine Anwendung zum Pulverspritzen gebracht werden. Es ist beispielsweise besonders zum Plasmaspritzen geeignet. Darüber hinaus kann es aber auch für alle anderen bekannten Verfahren zum Pulverspritzen verwendet werden.

In diesem Ausführungsbeispiel enthält die erste Lösung 12 ein Chlorid (Scandiumchlorid (ScCl₃6H₂O)). Anstelle eines Chlorides kann aber auch ein Acetat oder ein anderes Salz, insbesondere Yttriumoxid (Y₂O₃) oder Ytterbiumoxid (YbO₃), in der zweiten Lösung 12 enthalten sein. Auch ein Gemisch aus wenigstens zwei Salzen ist für das Verfahren geeignet.

Die Lösung 12 enthält in diesem Ausführungsbeispiel als Alkoholat Zirkonium-n-propoxid (Zr(OₙC₃H₇)₄). Anstelle eines Propoxids kann aber auch ein anderes Alkoholat verwendet werden.

Außerdem können die Ausgangsstoffe aus den Vorratsbehältern 2 bis 8 auch zugleich in einer Lösung aufbereitet werden (anstatt teilweise getrennt in der ersten und der zweiten Lösung 12,13). Allerdings ist die Aufbereitung in zwei Lösungen 12,13 in der Regel vorzuziehen, da man auf diesem Wege eine bessere Mischung der Ausgangsstoffe erhält.

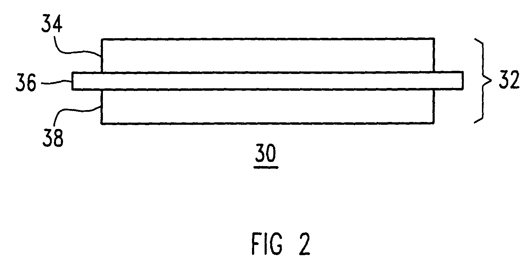

Gemäß FIG 2 umfaßt eine Hochtemperatur-Brennstoffzelle 30 eine Festelektrolyt-Elektroden-Einheit (Einheit 32). Die Einheit 32 besteht aus einer als Kathode ausgeführten Elektrode 34, einem als Membran ausgeführten Elektrolyten 36 und einer als Anode ausgeführten Elektrode 38, die in dieser Reihenfolge übereinander oder untereinander angeordnet sind.

Die Einheit 32 ist zwischen zwei nicht näher dargestellten metallischen Verbundleiterplatten zum Versorgen der Einheit 32 mit Betriebsmitteln angeordnet. Dabei kann es sich insbesondere um Wasserstoff (H₂) und Sauerstoff (O₂) handeln. Die erforderlichen Kontakte und gegebenenfalls Schutzschichten sind ebenfalls nicht dargestellt.

Die Elektrode 34 enthält als Elektronenleiter Lanthanstrontiummanganat (LaₓSr_{y}MnO₃) und einen Elektrolyten (gemeint ist hier nicht der Elektrolyt 36 als Bauelement der Hochtemperatur-Brennstoffzelle 30, sondern ein Elektrolyt als stoffliche Komponente des keramischen Werkstoffes der als Kathode ausgeführten Elektrode 34), wobei der Elektrolyt Zirkoniumoxid (ZrO₂) mit z.B. einem Anteil Yttriumoxid (Y₂O₃) oder sonstigen bekannten Beimischungen zum Stabilisieren der kubischen Phase des Zirkoniumoxids (ZrO₂) versetzt ist.

Der als Membran ausgeführte Elektrolyt 36 und die Elektrode 38 enthalten ebenfalls jeweils Zirkoniumoxid (ZrO₂) mit einem Anteil Yttriumoxid (Y₂O₃) (anstelle von Yttriumoxid (Y₂O₃) kann unter anderem auch Scandiumoxid (Sc₂O₃) und Ytterbiumoxid (YbO₃) im Elektrolyten 36 enthalten sein).

Der Anteil der Oxide im Elektrolyten beträgt zwischen 8 und 13 Mol-%. Der Anteil kann aus einem einzelnen Oxid oder aus einem Gemisch der Oxide gebildet sein, wobei das Gemisch aus wenigstens zwei der Oxide (Yttriumoxid (Y₂O₃), Scandiumoxid (Sc₂O₃) und Ytterbiumoxid (YbO₃))besteht.

Die Komponenten 34,36,38 der Einheit 32 enthalten somit jeweils einen keramischen Werkstoff, der durch das in FIG 1 beschriebene Verfahren hergestellt werden kann. Die Komponenten 26 bis 30 der Einheit 24 (d.h. die gesamte Einheit 32) können somit durch eine Anwendung des Verfahrens hergestellt werden.

Auch beim Herstellen keramischer Schutzschichten für die nicht näher dargestellten metallischen Verbundleiterplatten kann das Verfahren verwendet werden. Außerdem ist das Verfahren auch für die Herstellung von anderen Typen von Brennstoffzellen geeignet.

## Patentansprüche

1. Verfahren zum Herstellen eines keramischen Pulvers (22) für die Herstellung eines ionenleitenden Elektrolyten (36) einer Hochtemperatur-Brennstoffzelle (30) mit folgenden Schritten:
- In einem ersten Schritt (A) werden eine erste Lösung (12) aus wenigstens einem Alkoholat eines Metalles und eine zweite Lösung (13) aus wenigstens einem Salz eines Metalles und aus einem Lösungsmittel gemischt und unter Zugabe von Wasser zu einem Gel (14) umgesetzt,
- in einem zweiten Schritt (B) wird das Gel (14) bei einer Temperatur von wenigstens 380 °C unter Stickstoff zu einem Xerogel (18) zersetzt,
- in einem dritten Schritt (C) wird das Xerogel zum keramischen Pulver (22) zerkleinert, und
- in einem vierten Schritt (D) wird das keramische Pulver (22) bei erhöhter Temperatur calciniert.

2. Verfahren nach Anspruch 1, **dadurch gekennzeichnet**, daß als Salz ein Chlorid in der zweiten Lösung (13) enthalten ist.

3. Verfahren nach Anspruch 1, **dadurch gekennzeichnet**, daß als Salz Scandiumoxid (Sc₂O₃) in der zweiten Lösung (13) enthalten ist.

4. Verfahren nach Anspruch 1, dadurch **gekennzeichnet**, daß als Salz Yttriumoxid (Y₂O₃) in der zweiten Lösung (13) enthalten ist.

5. Verfahren nach Anspruch 1, **dadurch gekennzeichnet,** daß als Salz Ytterbiumoxid (Yb₂O₃) in der zweiten Lösung (13) enthalten ist.

6. Verfahren nach einem der vorhergehenden Ansprüche ,
**dadurch gekennzeichnet**, daß als Salz
ein Gemisch aus wenigstens zwei Salzen in der zweiten Lösung (13) enthalten ist.

7. Verfahren nach einem der vorhergehenden Ansprüche,
**dadurch gekennzeichnet**, daß die erste Lösung (12) etwa 20 Gew.-% Eisessig (CH₃COOH) enthält.

8. Verfahren nach einem der vorhergehenden Ansprüche, **gekennzeichnet durch** eine Zeitdauer t₁ zwischen 12 und 30 Stunden für den zweiten Schritt (B).

9. Verfahren nach einem der vorhergehenden Ansprüche,
**dadurch gekennzeichnet**, daß im vierten Schritt (D) die Calcinierung bei einer Temperatur T₂ zwischen 560 und 680°C durchgeführt wird.

10. Verfahren nach einem der vorhergehenden Ansprüche, **gekennzeichnet durch** eine Zeitdauer t₂ von angenähert 5 Stunden für den vierten Schritt (D).

11. Verfahren nach einem der vorhergehenden Ansprüche
**dadurch gekennzeichnet**, daß die Korngröße des keramischen Pulvers (22) durch den Grad der Zerkleinerung im dritten Schritt (C) bestimmt wird.

## Claims

1. Method for preparing a ceramic powder (22) for the production of an ion-conducting electrolyte (36) of a high-temperature fuel cell (30), having the following steps:
- in a first step (A), a first solution (12) consisting of at least one alcoholate of a metal and a second solution (13) consisting of at least one salt of a metal and a solvent are mixed and, with addition of water, are reacted to form a gel (14),
- in a second step (B), the gel (14) is decomposed in the presence of nitrogen at a temperature of at least 380°C to form a xerogel (18),
- in a third step (C), the xerogel is comminuted to form the ceramic powder (22), and
- in a fourth step (D), the ceramic powder (22) is calcined at a raised temperature.

2. Method according to claim 1, characterised in that the second solution (13) contains a chloride as the salt.

3. Method according to claim 1, characterised in that the second solution (13) contains scandium oxide (Sc₂O₃) as the salt.

4. Method according to claim 1, characterised in that the second solution (13) contains yttrium oxide (Y₂O₃) as the salt.

5. Method according to claim 1, characterised in that the second solution (13) contains ytterbium oxide (YbO₃) as the salt .

6. Method according to one of the preceding claims, characterised in that the second solution (13) contains a mixture of at least two salts as the salt.

7. Method according'to one of the preceding claims, characterised in that the first solution (12) contains approximately 20% by weight glacial acetic acid (CH₃COOH).

8. Method according to one of the preceding claims, characterised by a period of time t₁ of between 12 and 30 hours for the second step (B).

9. Method according to one of the preceding claims, characterised in that in the fourth step (D), the calcination is carried out at a temperature T₂ of between 560 and 680°C.

10. Method according to one of the preceding claims, characterised by a period of time t₂ of approximately 5 hours for the fourth step (D).

11. Method according to one of the preceding claims, characterised in that the grain size of the ceramic powder (22) is determined by the degree of comminution in the third step (C).

## Revendications

1. Procédé de préparation d'une poudre (22) en céramique pour la préparation d'un électrolyte (36) conduisant les ions d'une pile (30) à combustible à haute température, comportant les stades suivants :
- dans un premier stade (A) on mélange une première solution (12) constituée d'au moins un alcoolate d'un métal et une deuxième solution (13) constituée d'au moins un sel d'un métal et d'un solvant et on les transforme par addition d'eau en un gel (14),
- dans un deuxième stade (B) on décompose le gel (14) à une température d'au moins 380°C sous azote en un xérogel (18),
- dans un troisième stade (C) on fragmente le xérogel en une poudre (22) en céramique et
- dans un quatrième stade (D) on calcine la poudre (22) en céramique à haute température.

2. Procédé suivant la revendication 1, caractérisé en ce que la deuxième solution (13) contient comme sel un chlorure.

3. Procédé suivant la revendication 1, caractérisé en ce que la deuxième solution (13) contient comme sel de l'oxyde de scandium (Sc₂O₃).

4. Procédé suivant la revendication 1, caractérisé en ce que la deuxième solution (13) contient comme sel de l'oxyde d'yttrium (Y₂O₃).

5. Procédé suivant la revendication 1, caractérisé en ce que la deuxième solution (13) contient comme sel de l'oxyde d'ytterbium (Yb₂O₃).

6. Procédé suivant l'une des revendications précédentes, caractérisé en ce que la deuxième solution (13) contient comme sel un mélange d'au moins deux sels

7. Procédé suivant l'une des revendications précédentes, caractérisé en ce que la première solution (12) contient environ 20% en poids d'acide acétique (CH₃COOH).

8. Procédé suivant l'une des revendications précédentes, caractérisé par une durée t₁ comprise entre 12 et 30 heures pour le deuxième stade (B).

9. Procédé suivant l'une des revendications précédentes, caractérisé en ce qu'il consiste à effectuer dans le quatrième stade (D) la calcination à une température t₂ comprise entre 560 et 680°C.

10. Procédé suivant l'une des revendications précédentes, caractérisé par une durée T₂ d'environ 5 heures pour le quatrième stade (D).

11. Procédé suivant l'une des revendications précédentes, caractérisé en ce que la granulométrie de la poudre (22) en céramique est déterminée par le degré de fragmentation au troisième stade (C).
